# EUROPEAN PATENT APPLICATION

(11) **EP 4 387 324 A1**
(43) Date of publication of application: **19.06.2024**
(21) Application number: 21953126.6
(22) Date of filing: 11.08.2021
(51) Int. Cl.: H04W 36/00

(54) **PAGING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: dompatent von Kreisler Selting Werner - Partnerschaft von Patent- und Rechtsanwälten mbB
(86) International application number: PCT/CN2021/112150
(87) International publication number: WO 2023/015504

(57) **Abstract**

Provided in the embodiments of the present disclosure is a paging method, the method being executed by a base station, and the method comprising: in response to determining that a first terminal executing a predetermined service cannot continue to execute the predetermined service, paging a second terminal in a radio resource control RRC disconnected state, wherein the second terminal is a backup terminal associated with the first terminal that continues to execute the predetermined service.

## Description

### TECHNICAL FIELD

The present disclosure relates to, but is not limited to, the field of wireless communication technologies, and in particular, to a paging method, an apparatus, a communication device and a storage medium.

### BACKGROUND

Multiple terminals may cooperate with each other to complete service(s) assigned by a network. For example, a multi-modality service involves multiple sources or forms of information. Terminal(s) that collects information of multiple modalities may be a same terminal or multiple terminals. In an application scenario, information of respective modalities needs to be combined and reported to the network. The network performs information fusion based on the information of respective modalities to achieve accurate identification and judgment functions.

In related art, during the procedure when a terminal performs a service, a connection may not be established. In this case, the terminal may not be able to normally perform the service allocated by the network, and the reliability of service execution cannot be guaranteed.

### SUMMARY

Embodiments of the present disclosure provide a paging method, an apparatus, a communication device and a storage medium.

According to a first aspect of embodiments of the present disclosure, there is provided a paging method. The method is performed by a base station and includes:
in response to determining that a first terminal performing a predetermined service cannot continue to perform the predetermined service, paging a second terminal which is in a Radio Resource Control (RRC) non-connected state;
wherein the second terminal is a backup terminal which is associated with the first terminal to continue to perform the predetermined service.

In an embodiment, the method further includes:
obtaining a paging identity of the second terminal, wherein the paging identity is used to page the second terminal.

In an embodiment, obtaining the paging identity of the second terminal includes:
receiving an initial message which carries the paging identity and is sent by a core network device when the second terminal performs an attachment procedure; or,
receiving a connection request completion message which carries the paging identity and is sent by the second terminal when performing the attachment procedure.

In an embodiment, the initial message further carries information about a mapping relationship between the first terminal and the second terminal; and/or, the connection request completion message further carries the information about the mapping relationship between the first terminal and the second terminal.

In an embodiment, paging the second terminal which is in the RRC non-connected state includes:
sending a paging message carrying the paging identity to the second terminal which is in the RRC non-connected state.

In an embodiment, an information field of the paging message indicates reason information for paging the second terminal.

In an embodiment, the method further includes:
receiving an RRC connection establishment request carrying the reason information sent by the second terminal; or
receiving an RRC connection resume request carrying the reason information sent by the second terminal.

In an embodiment, the method further includes:
in response to receiving the RRC connection establishment request, accepting the RRC connection establishment request; or,
in response to receiving the RRC connection resume request, accepting the RRC connection resume request.

According to a second aspect of embodiments of the present disclosure, there is provided a paging method. The method is performed by a second terminal and includes:
receiving a paging message sent by a base station;
wherein the paging message is a message sent by the base station to page the second terminal in response to determining that a first terminal performing a predetermined service cannot continue to perform the predetermined service, and the second terminal is a backup terminal which is associated with the first terminal to continue to perform the predetermined service.

In an embodiment, the method further includes:
send a paging identity to the base station, wherein the paging identity is used to page the second terminal.

In an embodiment, sending the paging identity to the base station includes:
when performing an attachment procedure, sending a connection request completion message carrying the paging identity to the base station.

In an embodiment, the connection request completion message further carries information about a mapping relationship between the first terminal and the second terminal.

In an embodiment, receiving the paging message sent by the base station includes:
receiving the paging message carrying the paging identity sent by the base station.

In an embodiment, an information field of the paging message indicates reason information for paging the second terminal.

In an embodiment, the method further includes:
in response to receiving the paging message, sending indication information carrying the reason information to Non-Access Stratum (NAS) of the second terminal.

In an embodiment, the method further includes:
in response to receiving the paging message, sending an RRC connection establishment request carrying the reason information; or
in response to receiving the paging message, sending an RRC connection resume request carrying the reason information.

According to a third aspect of embodiments of the present disclosure, there is provided a paging method. The method is performed by a core network device and includes:
sending a paging identity to a base station;
wherein the paging identity is used by the base station to page a second terminal which is in an RRC non-connected state when it is determined that a first terminal cannot continue to perform a predetermined service, and the second terminal is a backup terminal which is associated with the first terminal to continue to perform the predetermined service.

In an embodiment, sending the paging identity to the base station includes:
when the second terminal performs an attachment procedure, sending an initial message carrying the paging identity to the base station.

In an embodiment, the initial message further carries information about a mapping relationship between the first terminal and the second terminal.

According to a fourth aspect of embodiments of the present disclosure, there is provided a paging apparatus, including:
a paging module configured to, in response to determining that a first terminal performing a predetermined service cannot continue to perform the predetermined service, page a second terminal which is in a Radio Resource Control (RRC) non-connected state;
wherein the second terminal is a backup terminal which is associated with the first terminal to continue to perform the predetermined service.

According to a fifth aspect of embodiments of the present disclosure, there is provided a paging apparatus, including:
a receiving module configured to receive a paging message sent by a base station;
wherein the paging message is a message sent by the base station to page the second terminal in response to determining that a first terminal performing a predetermined service cannot continue to perform the predetermined service, and the second terminal is a backup terminal which is associated with the first terminal to continue to perform the predetermined service.

According to a sixth aspect of embodiments of the present disclosure, there is provided a paging apparatus, including:
a sending module configured to send a paging identity to a base station;
wherein the paging identity is used by the base station to page a second terminal which is in an RRC non-connected state when it is determined that a first terminal cannot continue to perform a predetermined service, and the second terminal is a backup terminal which is associated with the first terminal to continue to perform the predetermined service.

According to a seventh aspect of embodiments of the present disclosure, there is provided a communication device. The communication device includes:
a processor;
a memory configured to store instructions executable by the processor;
wherein the processor is configured to implement the method described in any one of embodiments of the present disclosure when the executable instructions are run.

According to an eighth aspect of embodiments of the present disclosure, there is provided a computer storage medium. The computer storage medium stores a computer executable program. When the executable program is executed by a processor, the method described in any one of embodiments of the present disclosure is implemented.

In the embodiments of the present disclosure, in response to determining that a first terminal performing a predetermined service cannot continue to perform the predetermined service, a second terminal in a Radio Resource Control (RRC) non-connected state is pated. The second terminal is a backup terminal which is associated with the first terminal for continuing to perform the predetermined service. Here, when the first terminal cannot continue to perform the predetermined service, a base station can page the second terminal in the RRC non-connected state to continue to perform the predetermined service. Compared with a situation where performing of the predetermine service fails when the first terminal cannot continue to perform the predetermined service, the reliability in performing of the predetermined service can be improved in the present disclosure.

### BRIEF DESCRIPTION OF THE DRAWINGS

FIG. 1 is a schematic structural diagram of a wireless communication system according to an example embodiment.
FIG. 2 is a schematic diagram of a multi-modality scenario according to an example embodiment.
FIG. 3 is a schematic flowchart of a paging method according to an example embodiment.
FIG. 4 is a schematic flowchart of a paging method according to an example embodiment.
FIG. 5 is a schematic flowchart of a paging method according to an example embodiment.
FIG. 6 is a schematic flowchart of a paging method according to an example embodiment.
FIG. 7 is a schematic flowchart of a paging method according to an example embodiment.
FIG. 8 is a schematic flowchart of a paging method according to an example embodiment.
FIG. 9 is a schematic flowchart of a paging method according to an example embodiment.
FIG. 10 is a schematic flowchart of a paging method according to an example embodiment.
FIG. 11 is a schematic flowchart of a paging method according to an example embodiment.
FIG. 12 is a schematic flowchart of a paging method according to an example embodiment.
FIG. 13 is a schematic flowchart of a paging method according to an example embodiment.
FIG. 14 is a schematic flowchart of a paging method according to an example embodiment.
FIG. 15 is a schematic diagram of a paging apparatus according to an example embodiment.
FIG. 16 is a schematic diagram of a paging apparatus according to an example embodiment.
FIG. 17 is a schematic diagram of a paging apparatus according to an example embodiment.
FIG. 18 is a schematic structural diagram of a terminal according to an example embodiment.
FIG. 19 is a block diagram of a base station according to an example embodiment.

### DETAILED DESCRIPTION

Example embodiments will be described in detail herein, examples of which are illustrated in the accompanying drawings. When the following description refers to the drawings, the same numbers in different drawings refer to the same or similar elements unless otherwise indicated. The implementations described in the following example embodiments do not represent all implementations consistent with embodiments of the present disclosure. Rather, they are merely examples of apparatus and methods consistent with aspects of embodiments of the present disclosure as detailed in the appended claims.

The terms in the embodiments of the present disclosure are for the purpose of describing example embodiments only and are not intended to limit the embodiments of the present disclosure. As used in the embodiments of the present disclosure and the appended claims, the singular forms "a", "an" and "the" are intended to include a plural form as well, unless the context clearly dictates otherwise. It will also be understood that the term "and/or" as used herein refers to and includes any and all possible combinations of one or more of associated listed items.

It should be understood that although the terms first, second, third, etc. may be used to describe various information in the embodiments of the present disclosure, the information should not be limited to these terms. These terms are only used to distinguish information of the same type from each other. For example, without departing from the scope of the embodiments of the present disclosure, first information may also be called second information, and similarly, second information may also be called first information. Depending on the context, the word "if' as used herein may be interpreted as "when" or "in a case where..." or "in response to determining...".

For the purpose of simplicity and ease of understanding, the terms "greater than" or "less than" are used when characterizing a size/magnitude relationship. However, those skilled in the art can understand that the term "greater than" also encompasses the meaning of "greater than or equal to", and "less than" also encompasses the meaning of "less than or equal to".

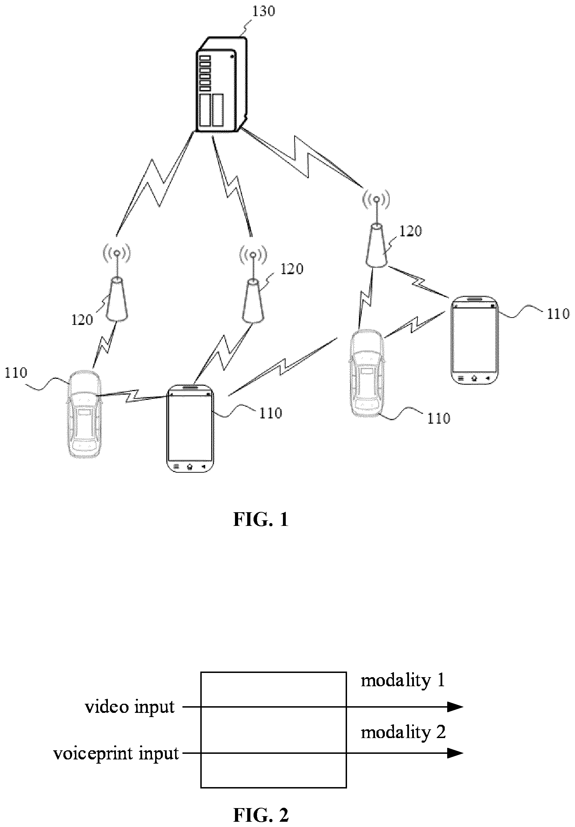

FIG. 1 shows a schematic structural diagram of a wireless communication system provided by an embodiment of the present disclosure. As shown in FIG. 1, the wireless communication system is a communication system based on mobile communication technologies. The wireless communication system may include multiple user equipments 110 and base stations 120.

User equipment 110 may be a device that provides voice and/or data connectivity to a user. The user equipment 110 may communicate with one or more core networks via a Radio Access Network (RAN). The user equipment 110 may be an Internet of Things user equipment, such as a sensor device, a mobile phone, and a computer with an Internet of Things user equipment, for example, it can be a fixed, portable, pocket-sized, handheld, computer-built-in or vehicle-mounted device. For example, the user equipment may be a station (STA), a subscriber unit, a subscriber station, a mobile station, a mobile, a remote station, an access point, a remote terminal, an access terminal, a user terminal, a user agent, a user device, or user apparatus. Alternatively, the user equipment 110 may be equipment of an unmanned aerial vehicle. Alternatively, the user equipment 110 may be a vehicle-mounted device, for example, it may be an on-board computer with a wireless communication function, or a wireless user equipment connected to an external on-board computer. Alternatively, the user equipment 110 may be a roadside device, for example, it may be a streetlight, a signal light or other roadside device with a wireless communication function.

A base station 120 may be a network-side device in a wireless communication system. The wireless communication system may be the 4th generation mobile communication (4G) system, also known as the Long Term Evolution (LTE) system; or, the wireless communication system may be a 5G system, also called new radio system or 5G NR system. Alternatively, the wireless communication system may be a next-generation system of the 5G system. The access network in the 5G system may be called New Generation-Radio Access Network (NG-RAN).

The base station 120 may be an evolved base station (eNB) used in the 4G system. Alternatively, the base station 120 may be a base station (gNB) using a centralized distributed architecture in the 5G system. When the base station 120 adopts a centralized distributed architecture, it usually includes a central unit (CU) and at least two distributed units (DU). The central unit is provided with a protocol stack including a Packet Data Convergence Protocol (PDCP) layer, a Radio Link Control protocol (RLC) layer, and a Media Access Control (MAC) layer; a distributed unit is provided with a physical (PHY) layer protocol stack. The embodiments of the present disclosure do not limit the specific implementation of the base station 120.

A wireless connection may be established between a base station 120 and user equipment 110 through a radio air interface. In different implementations, the radio air interface is a radio air interface based on the fourth generation mobile communication network technology (4G) standard; or, the radio air interface is a radio air interface based on the fifth generation mobile communication network technology (5G) standard, for example, the radio air interface is a new air interface; alternatively, the radio air interface may be a radio air interface based on the next generation mobile communication network technology standard of 5G.

In some embodiments, an End to End (E2E) connection may be established between user equipments 110, for example, vehicle to vehicle (V2V) communication, vehicle to Infrastructure (V2I) communication and vehicle to pedestrian (V2P) communication in vehicle to everything (V2X) and so on.

Here, the above user equipment can be considered as the terminal device in the following embodiments.

In some embodiments, the above-mentioned wireless communication system may also include a network management device 130.

Multiple base stations 120 are connected to the network management device 130 respectively. The network management device 130 may be a core network device in a wireless communication system. For example, the network management device 130 may be a Mobility Management Entity (MME) in an Evolved Packet Core (EPC). Alternatively, the network management device may be other core network devices, such as Serving GateWay (SGW), Public Data Network GateWay (PGW), Policy and Charging Rules Function (PCRF) or Home Subscriber Server (HSS), etc. The embodiments of the present disclosure do not limit the implementation form of the network management device 130.

In order to facilitate understanding by those skilled in the art, multiple implementations are set forth in the embodiments of the present disclosure to clearly describe the technical solutions of the embodiments of the present disclosure. Of course, those skilled in the art can understand that the multiple embodiments provided in the present disclosure can be performed alone or in combination with methods of other embodiments in the present disclosure, or the multiple embodiments may be perform together with some methods in related art after the embodiments are performed alone or in combination. No specific limitations are imposed on this.

In order to better understand the technical solutions disclosed in the embodiments of the present disclosure, a paging application scenario and a multi-modality application scenario are described:
In a Discontinuous Reception (DRX) scenario of Radio Resource Control (RRC) idle state, a terminal may stop monitoring of a paging message according to a DRX rule to achieve power saving. In the RRC idle state, the terminal monitors a paging channel used for paging initiated by a core network. In an RRC inactive state, the terminal also monitors a paging channel used for paging initiated by a radio access network. The terminal does not need to continuously monitor the paging channel. A terminal in the RRC idle state or RRC inactive state only needs to monitor the paging channel during one paging occasion in each DRX cycle.

Multi-modality involves multiple sources or forms of information. For example, human senses include touch, hearing, vision, smell, etc., which have different sources of information. For another example, media of information includes voice, video, text, etc., and there may be different forms of information.

In an application scenario, in order to sense user input from multiple dimensions, there are many types and numbers of applications and/or devices used for multi-modality information collection, for example, camera(s), speaker(s), sensor(s), keyboard(s) and fingerprint collector(s) may be included. These devices for collecting information of multiple modalities may be the same device or multiple devices.

Referring to an application scenario of FIG. 2, in a single-user-single-device multi-modality scenario, user's video information may be collected through a camera on the same handheld terminal, and the user's voiceprint information may be collected through a sensor on the mobile phone, that is, information of two modalities is obtained at the same time. At this time, if the information of the two modalities needs to be reported to a network, the information of the two modalities needs to be reported in combination to the network. In this case, if data sets of the two modalities are out of synchronization or the data set of a certain modality is lost, this will bring a bad experience to the user.

In one embodiment, when multi-modality involves multiple inputs (here, the multiple inputs may come from one terminal or multiple terminals), it may be an application layer that initiates a service, and performs decision-making based on situations of the multiple inputs. At this time, there may be a problem: if a connection cannot be successfully established for several of multiple services, it will cause the application layer to discard data that has been received. This processing method does not have much impact on existing wired networks or Wireless Fidelity (WIFI) technologies. However, if this occurs in a mobile network, it will lead to a huge waste of radio resources, because radio resources are very precious, and it is necessary to try to avoid the situation where data packets are transmitted to the application layer and then discarded. Therefore, when a terminal encounters a problem and cannot continue to perform a service, a backup mechanism needs to be used to transfer the service to another backup terminal as soon as possible. When the backup terminal is in the RRC idle state, if a base station can know the existence of the backup terminal, the base station can page the terminal as soon as possible to facilitate service initiation. However, in the related art, paging for a user in the RRC idle state is initiated from a core network, and paging initiated from a base station is only for a user in the RRC inactive state. Therefore, enhancement of the paging mechanism needs to be considered. Of course, multi-modality is one of the scenarios in which the technical solutions of the present disclosure can be applied, but it is not the only scenario.

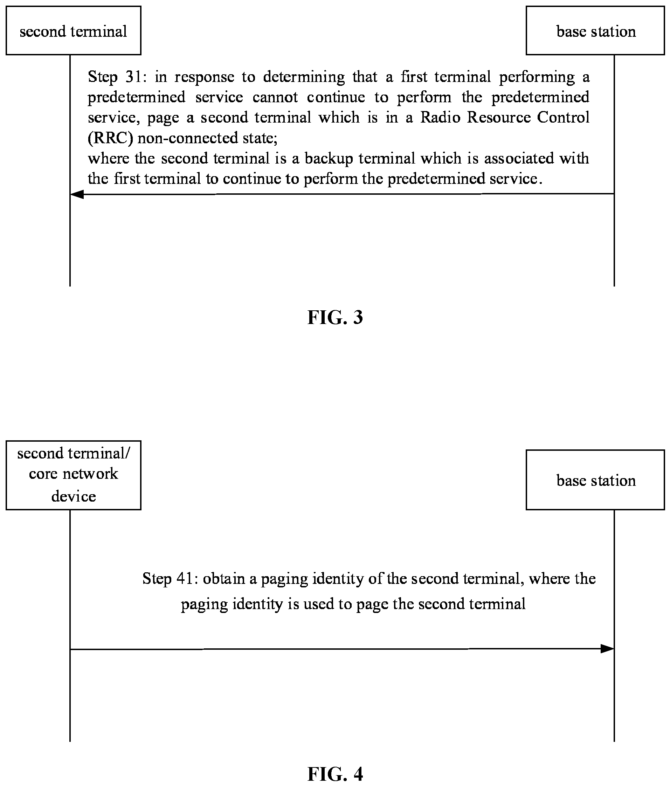

As shown in FIG. 3, an embodiment provides a paging method. The method is performed by a base station, and the method includes:
In step 31, in response to determining that a first terminal performing a predetermined service cannot continue to perform the predetermined service, a second terminal in a Radio Resource Control (RRC) non-connected state is paged.

The second terminal is a terminal associated with the first terminal. For example, the second terminal may be a backup terminal that continues to perform the predetermined service of the first terminal.

Here, the terminals involved in the present disclosure, such as the first terminal and the second terminal, may be but are not limited to mobile phones, tablet computers, wearable devices, vehicle-mounted terminals, Road Side Units (RSUs), smart home terminals, industrial sensing devices and/or medical devices, etc. For example, a smart home terminal may include a camera, a temperature collection device, a brightness collection device, etc.

Here, the base station involved in the present disclosure may be various types of base stations, for example, a base station in the third generation mobile communication (3G) network, a base station in the fourth generation mobile communication (4G) network, a base station in the fifth generation mobile communication (5G) network, or other evolved base station.

The core network device involved in the present disclosure may be various types of core network devices, such as a core network device in a 5G network or other evolved core network device.

In one embodiment, the predetermined service may be a multi-modality service or any service that requires collaboration. The first terminal may cooperate with other terminals to perform a multi-modality service or any service that require collaboration. The first terminal is used to obtain data of one modality in multi-modality data. Here, in response to the first terminal being able to establish an RRC connection normally or the RRC connection being in a normal state or in the RRC connected state, the first terminal can perform the predetermined service; in response to the first terminal being unable to establish the RRC connection normally or the RRC connection being disconnected, the first terminal cannot perform the predetermined service. In one embodiment, when the first terminal is performing the predetermined service, if the RRC connection is disconnected, the first terminal cannot continue to perform the predetermined service. Of course, these are just examples. There are many situations in which the first terminal cannot continue to perform the predetermined service. In addition to the above-mentioned situations, the situations may also include: the first terminal actively stops the predetermined service; or the network side or a control end schedules the first terminal to transfer the predetermined service to the second terminal; or the second terminal requests to transfer the predetermined service from the first terminal to the second terminal.

It should be noted that the predetermined service may also be other service(s) than the multi-modality service.

In one embodiment, the base station may periodically determine whether the first terminal that performs the predetermined service can continue to perform the predetermined service according to a predetermined period. The predetermined period may be set according to network quality. For example, in response to a wireless transmission quality of the network being greater than or equal to a quality threshold, it is determined that the predetermined period is greater than the period threshold. Alternatively, in response to the wireless transmission quality of the network being less than or equal to the quality threshold, it is determined that the predetermined period is less than the period threshold. In this way, the predetermined period can be adapted to the wireless transmission quality of the network. It should be noted that the first terminal may also periodically determine, according to a predetermined period, whether the first terminal performing the predetermined service can continue to perform the predetermined service, and then feed the determination result back to the base station, which is not limited in the present disclosure.

Here, the RRC non-connected state may be a state in which an RRC connection is not established. For example, the second terminal in the RRC non-connected state may be a terminal in the RRC idle state or a terminal in the RRC inactive state.

In one embodiment, in response to determining that the first terminal performing the predetermined service cannot continue to perform the predetermined service, the second terminal in the RRC idle state is paged; where the second terminal is a backup terminal which is associated with the first terminal to continue to perform the predetermined service. In another embodiment, in response to determining that the first terminal performing the predetermined service cannot continue to perform the predetermined service, the second terminal in the RRC inactive state is paged; where the second terminal is a backup terminal which is associated with the first terminal to continue to perform the predetermined service.

Here, the association between the first terminal and the second terminal may be that the first terminal and the second terminal belong to the same group. Here, the group may be determined by the first terminal, the second terminal and/or the network. Here, the group may be indicated by a group identity, and terminals with the same group identity belong to the same group. The first terminal and the second terminal may determine whether they belong to the same group according to their respective group identities. Here, it is also possible that the first terminal stores a mapping relationship between the first terminal and the second terminal, so that the first terminal can determine the second terminal associated with the first terminal based on the mapping relationship. Here, one terminal in the group may be a backup terminal for another terminal. Multiple terminals in the group can be divided into backup terminals and terminals for which backup terminals are provided. A terminal for which a backup terminal is provided can be replaced by the backup terminal to continue to perform a predetermined service.

In one embodiment, the base station obtains a paging identity of the second terminal. The paging identity is used to page the second terminal. In response to determining that the first terminal performing the predetermined service cannot continue to perform the predetermined service, the base station uses the paging identity of the second terminal to page the second terminal in the RRC non-connected state. The second terminal is a backup terminal associated with the first terminal to continue to perform the predetermined service. In one embodiment, the base station may receive an initial message carrying a paging identity sent by a core network device when the second terminal performs an attachment procedure; in response to determining that the first terminal performing the predetermined service cannot continue to perform the predetermined service, the base station uses the paging identity carried in the initial message to page the second terminal in the RRC non-connected state. In another embodiment, the base station may receive a connection request completion message carrying a paging identity sent by the second terminal when performing the attachment procedure; in response to determining that the first terminal performing the predetermined service cannot continue to perform the predetermined service, the base station uses the paging identity carried in the connection request completion message to page the second terminal in the RRC non-connected state. Here, the paging identity may be a non-access stratum identity, for example, S-Temporary Mobile Subscriber Identity (S-TMSI).

It should be noted that, in one embodiment, the base station obtains the paging identity of the second terminal, where the paging identity is used to page the second terminal; in response to determining that the first terminal that performs the predetermined service cannot continue to perform the predetermined service, the base station uses the paging identity of the second terminal to page the second terminal in the RRC non-connected state. However, if the base station determines through the paging identity of the second terminal that the second terminal is already in the RRC connected state, it can directly initiate the establishment of the service. At this time, there is no need to page the second terminal.

In one embodiment, in response to determining that the first terminal performing the predetermined service cannot continue to perform the predetermined service, a paging message carrying the paging identity is sent to the second terminal in the RRC non-connected state; where the second terminal is a backup terminal associated with the first terminal to continue to perform the predetermined service. Here, an information field of the paging message indicates reason information for paging the second terminal. Here, the reason information is information indicating that the information is sent when the first terminal cannot continue to perform the predetermined service and that the second terminal needs to be paged. In one embodiment, the information field carries a predetermined identity, and the predetermined identity is used to indicate that the information is sent when the first terminal cannot continue to perform the predetermined service and that the second terminal needs to be paged. For example, the information field of the paging message sent by the base station to the second terminal carries a predetermined identity "001". After the second terminal receives the paging message, it can determine that the paging message is for paging the second terminal and is sent when the first terminal cannot continue to perform the predetermined service.

In one embodiment, in response to determining that the first terminal performing the predetermined service cannot continue to perform the predetermined service, a paging message carrying the paging identity is sent to the second terminal in the RRC non-connected state; where the second terminal is a backup terminal associated with the first terminal to continue to perform the predetermined service. An information field of the paging message indicates the reason information for paging the second terminal. The base station receives an RRC connection establishment request carrying reason information sent by the second terminal in response to the paging message. The base station accepts the RRC connection establishment request and establishes an RRC connection. Here, accepting the RRC connection establishment request refers to determining to establish the RRC connection. If the RRC connection establishment request is rejected, the RRC connection is not established.

In one embodiment, in response to determining that the first terminal performing the predetermined service cannot continue to perform the predetermined service, a paging message carrying the paging identity is sent to the second terminal in the RRC non-connected state; where the second terminal is a backup terminal associated with the first terminal to continue to perform the predetermined service. An information field of the paging message indicates the reason information for paging the second terminal. The base station receives an RRC connection resume request carrying reason information sent by the second terminal in response to the paging message. The base station accepts the RRC connection resume request and establishes an RRC connection. Here, accepting the RRC connection resume request refers to determining to establish the RRC connection. If the RRC connection resume request is rejected, the RRC connection is not established.

In the embodiments of the present disclosure, in response to determining that the first terminal performing the predetermined service cannot continue to perform the predetermined service, the second terminal in the Radio Resource Control (RRC) non-connected state is paged; where the second terminal is a backup terminal associated with the first terminal to continue to perform the predetermined service. Here, when the first terminal cannot continue to perform the predetermined service, the base station can page the second terminal in the RRC non-connected state to continue to perform the predetermined service. Compared with a situation where performing of the predetermined service fails when the first terminal cannot continue to perform the predetermined service, the reliability in performing of the predetermined service can be improved in the present disclosure.

It should be noted that those skilled in the art can understand that the methods provided in the embodiments of the present disclosure can be performed alone or together with some methods in the embodiments of the present disclosure or some methods in related art.

As shown in FIG. 4, an embodiment provides a paging method. The method is performed by a base station, and the method includes:
In step 41, a paging identity of the second terminal is obtained. The paging identity is used to page the second terminal.

Here, the second terminal is a backup terminal associated with the first terminal to continue to perform a predetermined service that the first terminal cannot perform. For the association relationship between the first terminal and the second terminal, please refer to the description of step 31, and repeated descriptions will be omitted here.

In one embodiment, the base station obtains the paging identity of the second terminal, where the paging identity is used to page the second terminal; in response to determining that the first terminal performing the predetermined service cannot continue to perform the predetermined service, the base station uses the paging identity of the second terminal to page the second terminal in the RRC non-connected state. Here, using the paging identity of the second terminal to page the second terminal in the RRC connected state may be sending a paging message carrying the paging identity to the second terminal. Here, the second terminal in the RRC non-connected state may be the second terminal in the RRC idle state.

In one embodiment, the base station may receive an initial message carrying a paging identity sent by the core network device when the second terminal performs the attachment procedure; in response to determining that the first terminal performing the predetermined service cannot continue to perform the predetermined service, the base station uses the paging identity carried in the initial message to page the second terminal in the RRC non-connected state.

In one embodiment, the base station may receive a connection request completion message carrying a paging identity sent by the second terminal when performing the attachment procedure; in response to determining that the first terminal performing the predetermined service cannot continue to perform the predetermined service, the base station uses the paging identity carried in the connection request completion message to page the second terminal in the RRC non-connected state.

It should be noted that those skilled in the art can understand that the methods provided in the embodiments of the present disclosure can be performed alone or together with some methods in the embodiments of the present disclosure or some methods in related art.

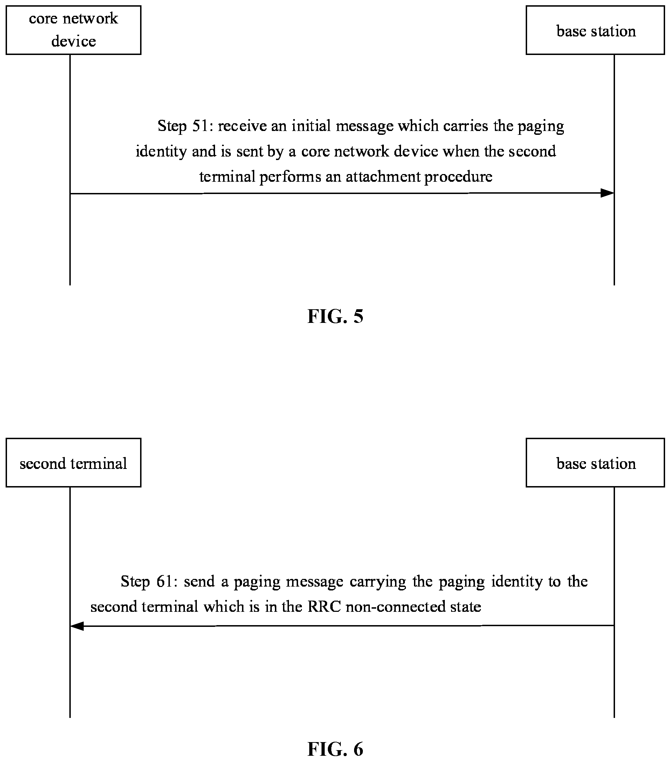

As shown in FIG. 5, an embodiment provides a paging method. The method is performed by a base station, and the method includes:
In step 51, an initial message carrying the paging identity sent by the core network device when the second terminal performs the attachment procedure is received.

In one embodiment, the base station may receive an initial message carrying a paging identity sent by the core network device when the second terminal performs the attachment procedure; in response to determining that the first terminal performing the predetermined service cannot continue to perform the predetermined service, the base station uses the paging identity carried in the initial message to page the second terminal in the RRC non-connected state.

In one embodiment, the initial message carries information about a mapping relationship between the first terminal and the second terminal. Here, the information about the mapping relationship may be information about a mapping relationship between terminal identities of the first terminal and the second terminal. For example, the terminal identity of the first terminal is "a", the terminal identity of the second terminal is "b", and the mapping relationship may be a relationship between "a" and "b". The mapping relationship may be information about a mapping relationship between terminal identities and group identities of the first terminal and the second terminal. For example, the terminal identity of the first terminal is "a", the terminal identity of the second terminal is "b", both the first terminal and the second terminal belong to a first group, and the identity of the first group is "A", and then the mapping relationship may be a relationship among "a", "b" and "A".

Alternatively, step 51 may be: receiving a connection request completion message carrying a paging identity sent by the second terminal when performing the attachment procedure.

In one embodiment, the base station may receive a connection request completion message carrying a paging identity sent by the second terminal when performing the attachment procedure; in response to determining that the first terminal performing the predetermined service cannot continue to perform the predetermined service, the base station uses the paging identity carried in the connection request completion message to page the second terminal in the RRC non-connected state.

In one embodiment, the connection request completion message may further carry information about a mapping relationship between the first terminal and the second terminal. Here, the information about the mapping relationship may be information about a mapping relationship between terminal identities of the first terminal and the second terminal. For example, the terminal identity of the first terminal is "a", the terminal identity of the second terminal is "b", and the mapping relationship may be a relationship between "a" and "b". The mapping relationship may be information about a mapping relationship between terminal identities and group identities of the first terminal and the second terminal. For example, the terminal identity of the first terminal is "a", the terminal identity of the second terminal is "b", both the first terminal and the second terminal belong to a first group, and the identity of the first group is "A", and then the mapping relationship may be a relationship among "a", "b" and "A".

It should be noted that those skilled in the art can understand that the methods provided in the embodiments of the present disclosure can be performed alone or together with some methods in the embodiments of the present disclosure or some methods in related art.

As shown in FIG. 6, an embodiment provides a paging method. The method is performed by a base station, and the method includes:
In step 61, a paging message carrying a paging identity is sent to the second terminal in the RRC non-connected state.

Here, the RRC non-connected state may be the RRC idle state.

In one embodiment, in response to determining that the first terminal performing the predetermined service cannot continue to perform the predetermined service, a paging message carrying the paging identity is sent to the second terminal in the RRC non-connected state; where the second terminal is a backup terminal associated with the first terminal to continue to perform the predetermined service. An information field of the paging message indicates the reason information for paging the second terminal. An RRC connection establishment request carrying reason information sent by the second terminal in response to the paging message is received; the RRC connection establishment request is accepted and an RRC connection is established. Here, accepting the RRC connection establishment request refers to determining to establish the RRC connection. If the RRC connection establishment request is rejected, the RRC connection is not established.

In one embodiment, in response to determining that the first terminal performing the predetermined service cannot continue to perform the predetermined service, a paging message carrying the paging identity is sent to the second terminal in the RRC non-connected state; where the second terminal is a backup terminal associated with the first terminal to continue to perform the predetermined service. An information field of the paging message indicates the reason information for paging the second terminal. An RRC connection resume request carrying reason information sent by the second terminal in response to the paging message is received; the RRC connection resume request is accepted and an RRC connection is established. Here, accepting the RRC connection resume request refers to determining to establish the RRC connection. If the RRC connection resume request is rejected, the RRC connection is not established.

It should be noted that those skilled in the art can understand that the methods provided in the embodiments of the present disclosure can be performed alone or together with some methods in the embodiments of the present disclosure or some methods in related art.

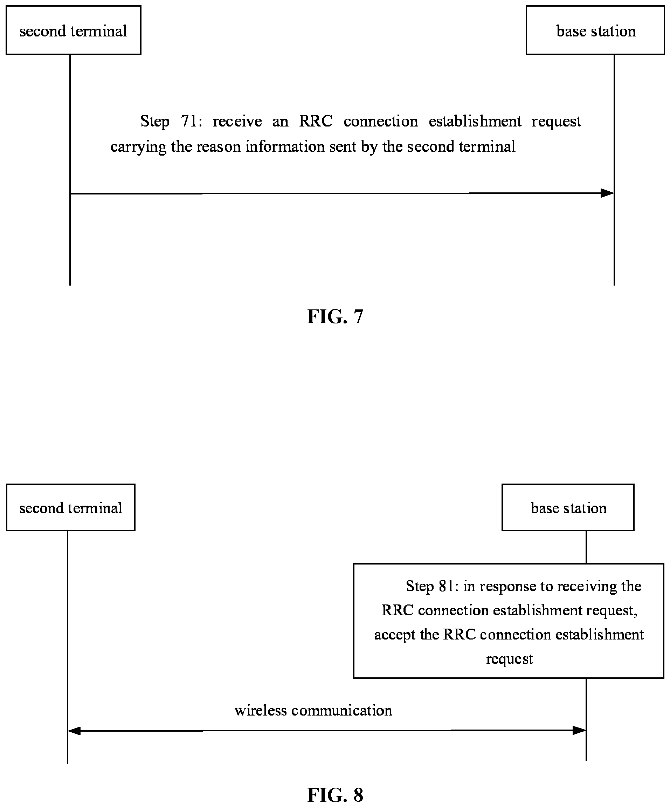

As shown in FIG. 7, an embodiment provides a paging method. The method is performed by a base station, and the method includes:
In step 71, an RRC connection establishment request carrying reason information sent by the second terminal is received.

In one embodiment, in response to determining that the first terminal performing the predetermined service cannot continue to perform the predetermined service, a paging message carrying the paging identity is sent to the second terminal in the RRC non-connected state; where the second terminal is a backup terminal associated with the first terminal to continue to perform the predetermined service. An information field of the paging message indicates the reason information for paging the second terminal. An RRC connection establishment request carrying reason information sent by the second terminal in response to the paging message is received; the RRC connection establishment request is accepted and an RRC connection is established.

In one embodiment, the second terminal is a terminal in the RRC idle state. When the second terminal receives the paging message, the AS forwards the paging message to the NAS. Specifically, after the NAS receives the paging message, the NAS may set the reason information for a call establishment request based on the reason carried in the paging message. For example, the set reason information is for backup use. After the AS subsequently receives the call establishment request, the second terminal sends an RRC connection establishment request carrying the reason information. Here, the reason information carried in the RRC connection establishment request may indicate: backup use. Here, the backup use is the use associated with the backup terminal in step 31.

In one embodiment, the second terminal is a terminal in the RRC inactive state. When the second terminal receives the paging message, there is no need to forward the paging message to the NAS. Specifically, the AS may specifically set the reason information for the call establishment request based on the reason carried in the paging message. For example, the reason information is for backup use. Subsequently, the second terminal sends an RRC connection establishment request carrying reason information. Here, the reason information carried in the RRC connection establishment request may indicate: backup use.

Alternatively, step 71 may be: receiving an RRC connection resume request carrying reason information sent by the second terminal.

In one embodiment, in response to determining that the first terminal performing the predetermined service cannot continue to perform the predetermined service, a paging message carrying the paging identity is sent to the second terminal in the RRC non-connected state; where the second terminal is a backup terminal associated with the first terminal to continue to perform the predetermined service. An information field of the paging message indicates the reason information for paging the second terminal. An RRC connection resume request carrying reason information sent by the second terminal in response to the paging message is received; the RRC connection resume request is received and an RRC connection is established.

It should be noted that those skilled in the art can understand that the methods provided in the embodiments of the present disclosure can be performed alone or together with some methods in the embodiments of the present disclosure or some methods in related art.

As shown in FIG. 8, an embodiment provides a paging method. The method is performed by a base station, and the method includes:
In step 81, in response to receiving the RRC connection establishment request, the RRC connection establishment request is accepted.

In one embodiment, in response to determining that the first terminal performing the predetermined service cannot continue to perform the predetermined service, a paging message carrying the paging identity is sent to the second terminal in the RRC non-connected state; where the second terminal is a backup terminal associated with the first terminal to continue to perform the predetermined service. An information field of the paging message indicates the reason information for paging the second terminal. The RRC connection establishment request carrying the reason information sent by the terminal in response to the paging message is received; the RRC connection establishment request is accepted and the RRC connection is established. Here, accepting the RRC connection establishment request refers to determining to establish the RRC connection. If the RRC connection establishment request is rejected, the RRC connection is not established.

Alternatively, step 81 may be: in response to receiving the RRC connection resume request, accepting the RRC connection resume request.

In one embodiment, in response to determining that the first terminal performing the predetermined service cannot continue to perform the predetermined service, a paging message carrying the paging identity is sent to the second terminal in the RRC non-connected state; where the second terminal is a backup terminal associated with the first terminal to continue to perform the predetermined service. An information field of the paging message indicates the reason information for paging the second terminal. The RRC connection resume request carrying reason information sent by the terminal in response to the paging message is received; the RRC connection resume request is received and establish the RRC connection. Here, accepting the RRC connection resume request refers to determining to establish the RRC connection. If the RRC connection resume request is rejected, the RRC connection is not established.

It should be noted that those skilled in the art can understand that the methods provided in the embodiments of the present disclosure can be performed alone or together with some methods in the embodiments of the present disclosure or some methods in related art.

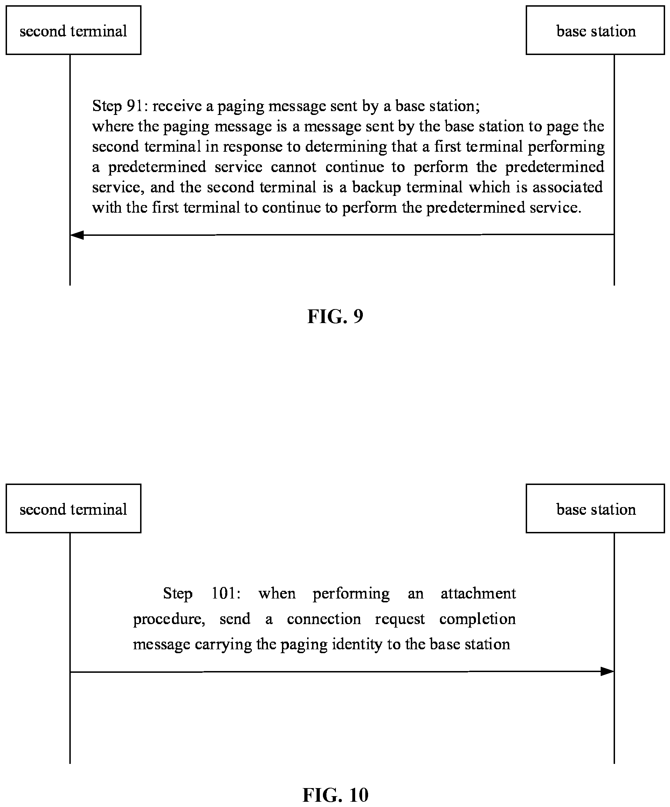

As shown in FIG. 9, an embodiment provides a paging method. The method is performed by a second terminal, and the method includes:
In step 91, a paging message sent by a base station is received.

The paging message is a message sent by the base station to page the second terminal in response to determining that a first terminal performing a predetermined service cannot continue to perform the predetermined service, and the second terminal is a backup terminal which is associated with the first terminal to continue to perform the predetermined service.

Here, the terminals involved in the present disclosure may be, but are not limited to, mobile phones, tablet computers, wearable devices, vehicle-mounted terminals, Road Side Units (RSUs), smart home terminals, industrial sensing devices, and/or medical devices, and so on. For example, a smart home terminal may include a camera, a temperature collection device, a brightness collection device, etc.

Here, the base station involved in the present disclosure may be various types of base stations, for example, a base station in the third generation mobile communication (3G) network, a base station in the fourth generation mobile communication (4G) network, a base station in the fifth generation mobile communication (5G) network or other evolved base station.

The core network device involved in the present disclosure may be various types of core network device, such as a core network device in a 5G network or other evolved core network device.

In one embodiment, the predetermined service may be a multi-modality service. The first terminal may cooperate with other terminals to perform a multi-modality service together. The first terminal is used to obtain data of one modality in multi-modality data. Here, in response to the first terminal being able to establish the RRC connection normally or the RRC connection being in a normal state, the first terminal can perform the predetermined service; in response to the first terminal being unable to establish the RRC connection normally or the RRC connection being disconnected, the first terminal cannot perform the predetermined service. In one embodiment, when the first terminal is performing a predetermined service, if the RRC connection is disconnected, the first terminal cannot continue to perform the predetermined service. It should be noted that the predetermined service may also be other service than the multi-modality service.

In one embodiment, the base station may periodically determine whether the first terminal that performs the predetermined service can continue to perform the predetermined service according to a predetermined period. In response to a wireless transmission quality of the network being greater than or equal to a quality threshold, it is determined that the predetermined period is greater than the period threshold. Alternatively, in response to the wireless transmission quality of the network being less than or equal to the quality threshold, it is determined that the predetermined period is less than the period threshold. In this way, the predetermined period can be adapted to the wireless transmission quality of the network. It should be noted that the first terminal may also periodically determine, according to a predetermined period, whether the first terminal performing the predetermined service can continue to perform the predetermined service, and then feed the determination result back to the base station, which is not limited in the present disclosure.

Here, the RRC non-connected state may be a state in which an RRC connection is not established. For example, the second terminal in the RRC non-connected state may be a terminal in the RRC idle state or a terminal in the RRC inactive state.

In one embodiment, in response to the base station determining that the first terminal performing the predetermined service cannot continue to perform the predetermined service, the second terminal in the RRC idle state is paged; where the second terminal is a backup terminal associated with the first terminal to continue to perform the predetermined service. The second terminal in the RRC idle state receives the paging message sent by the base station. In another embodiment, in response to determining that the first terminal performing the predetermined service cannot continue to perform the predetermined service, the second terminal in the RRC inactive state is paged; where the second terminal is a backup terminal associated with the first terminal to continue to perform the predetermined service. The second terminal in the RRC inactive state receives the paging message sent by the base station.

Here, the association between the first terminal and the second terminal may be that the first terminal and the second terminal belong to the same group. Here, the group may be determined by the first terminal, the second terminal and/or the network. Here, the group may be indicated by a group identity, and terminals with the same group identity belong to the same group. The first terminal and the second terminal may determine whether they belong to the same group according to their respective group identities. Here, it may be possible that the first terminal stores a mapping relationship between the first terminal and the second terminal, so that the first terminal can determine the second terminal associated with the first terminal based on the mapping relationship. Here, one terminal in the group can be a backup terminal for another terminal. Multiple terminals in the group can be divided into backup terminals and terminals for which backup terminals are provided. A terminal for which a backup terminal is provided can be replaced by the backup terminal to continue to perform a predetermined service.

In one embodiment, the base station obtains the paging identity of the second terminal. The paging identity is used to page the second terminal. In response to determining that the first terminal performing the predetermined service cannot continue to perform the predetermined service, the base station uses the paging identity of the second terminal to page the second terminal in the RRC non-connected state. The second terminal is a backup terminal associated with the first terminal to continue to perform the predetermined service. The second terminal in the RRC non-connected state receives the paging message sent by the base station. In one embodiment, the base station may receive an initial message carrying a paging identity sent by the core network device when the second terminal performs the attachment procedure; in response to determining that the first terminal performing the predetermined service cannot continue to perform the predetermined service, the base station uses the paging identity carried in the initial message to page the second terminal in the RRC non-connected state. The second terminal in the RRC non-connected state receives the paging message sent by the base station. In another embodiment, the base station may receive a connection request completion message carrying a paging identity sent by the second terminal when performing the attachment procedure; in response to determining that the first terminal performing the predetermined service cannot continue to perform the predetermined service, the base station uses the paging identity carried in the connection request completion message to page the second terminal in the RRC non-connected state. The second terminal in the RRC non-connected state receives the paging message sent by the base station.

In one embodiment, in response to determining that the first terminal performing the predetermined service cannot continue to perform the predetermined service, the base station sends a paging message carrying the paging identity to the second terminal in the RRC non-connected state; where the second terminal is a backup terminal associated with the first terminal to continue to perform the predetermined service. The second terminal in the RRC non-connected state receives the paging message. Here, an information field of the paging message indicates the reason information for paging the second terminal. Here, the reason information is information indicating that the information is sent when the first terminal cannot continue to perform the predetermined service and that the second terminal needs to be paged. In one embodiment, the information field carries a predetermined identity, and the predetermined identity is used to indicate that the information is sent when the first terminal cannot continue to perform the predetermined service and that the second terminal needs to be paged. For example, the information field of the paging message sent by the base station to the second terminal carries the predetermined identity "001". After the second terminal receives the paging message, it can determine that the paging message is for paging the second terminal and is sent when the first terminal cannot continue to perform the predetermined service..

In one embodiment, in response to determining that the first terminal performing the predetermined service cannot continue to perform the predetermined service, the base station sends a paging message carrying the paging identity to the second terminal in the RRC non-connected state; where the second terminal is a backup terminal associated with the first terminal to continue to perform the predetermined service. An information field of the paging message indicates the reason information for paging the second terminal. The second terminal sends an RRC connection establishment request carrying reason information in response to the paging message. The base station receives the RRC connection establishment request; the base station accepts the RRC connection establishment request and establishes the RRC connection. Here, accepting the RRC connection establishment request refers to determining to establish the RRC connection. If the RRC connection establishment request is rejected, the RRC connection is not established. In one embodiment, in response to determining that the first terminal performing the predetermined service cannot continue to perform the predetermined service, the base station sends a paging message carrying the paging identity to the second terminal in the RRC non-connected state; where the second terminal is a backup terminal associated with the first terminal to continue to perform the predetermined service. An information field of the paging message indicates the reason information for paging the second terminal. The second terminal sends an RRC connection establishment request carrying reason information for the paging message. The base station receives the RRC connection resume request; the base station accepts the RRC connection resume request and establishes the RRC connection. Here, accepting the RRC connection resume request refers to determining to establish the RRC connection. If the RRC connection resume request is rejected, the RRC connection is not established.

It should be noted that those skilled in the art can understand that the methods provided in the embodiments of the present disclosure can be performed alone or together with some methods in the embodiments of the present disclosure or some methods in related art.

As shown in FIG. 10, an embodiment provides a paging method. The method is performed by the second terminal, and the method includes:
In step 101, a connection request completion message carrying a paging identity is sent to the base station when an attachment procedure is performed.

In one embodiment, the second terminal may send a connection request completion message carrying a paging identity to the base station when performing the attachment procedure; the base station receives the connection request completion message; in response to determining that the first terminal performing the predetermined service cannot continue to perform the predetermined service, the base station uses the paging identity carried in the connection request completion message to page the second terminal in the RRC non-connected state.

In one embodiment, the connection request completion message may also carry information about a mapping relationship between the first terminal and the second terminal. Here, the information about the mapping relationship may be information about a mapping relationship between terminal identities of the first terminal and the second terminal. For example, the terminal identity of the first terminal is "a", the terminal identity of the second terminal is "b", and the mapping relationship may be a relationship between "a" and "b". The mapping relationship may also be information about a mapping relationship between terminal identities and group identities of the first terminal and the second terminal. For example, the terminal identity of the first terminal is "a", the terminal identity of the second terminal is "b", both the first terminal and the second terminal belong to a first group, and the identity of the first group is "A", and then the mapping relationship may be a relationship among "a", "b" and "A".

It should be noted that those skilled in the art can understand that the methods provided in the embodiments of the present disclosure can be performed alone or together with some methods in the embodiments of the present disclosure or some methods in related art.

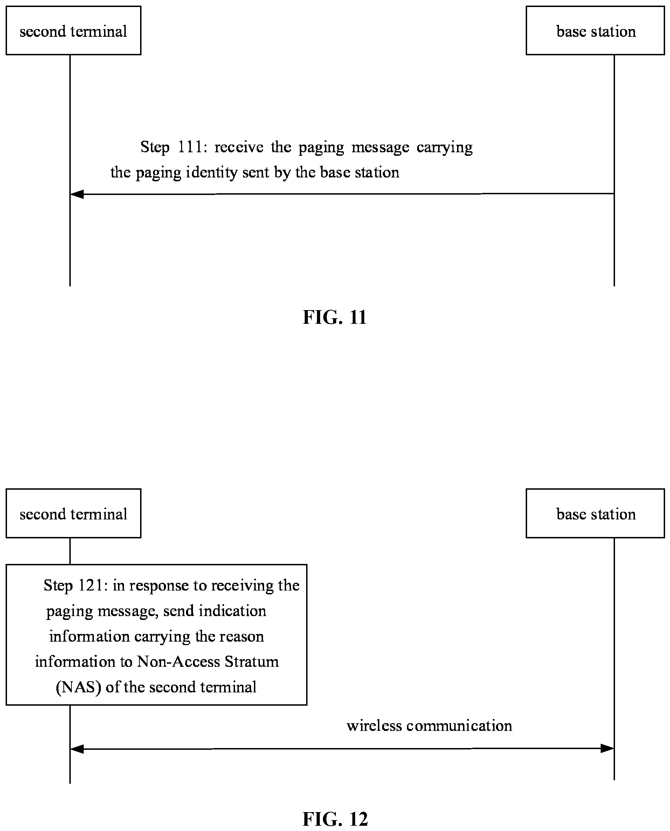

As shown in FIG. 11, an embodiment provides a paging method. The method is performed by the second terminal, and the method includes:
In step 111, the paging message carrying the paging identity sent by the base station is received.

Here, the RRC non-connected state may be the RRC idle state.

In one embodiment, in response to determining that the first terminal performing the predetermined service cannot continue to perform the predetermined service, the base station sends the paging message carrying the paging identity to the second terminal in the RRC non-connected state; where the second terminal is a backup terminal associated with the first terminal to continue to perform the predetermined service. An information field of the paging message indicates the reason information for paging the second terminal. The second terminal receives the paging message carrying the paging identity sent by the base station. The second terminal sends an RRC connection establishment request carrying reason information in response to the paging message. The base station receives the RRC connection establishment request; the base station accepts the RRC connection establishment request and establishes the RRC connection.

In one embodiment, in response to determining that the first terminal performing the predetermined service cannot continue to perform the predetermined service, the paging message carrying the paging identity is sent to the second terminal in the RRC non-connected state; where the second terminal is a backup terminal associated with the first terminal to continue to perform the predetermined service. An information field of the paging message indicates the reason information for paging the second terminal. The second terminal receives the paging message carrying the paging identity sent by the base station. The second terminal sends an RRC connection establishment request carrying reason information in response to the paging message. The base station receives the RRC connection resume request; the base station accepts the RRC connection resume request and establishes the RRC connection.

It should be noted that those skilled in the art can understand that the methods provided in the embodiments of the present disclosure can be performed alone or together with some methods in the embodiments of the present disclosure or some methods in related art.

As shown in FIG. 12, an embodiment provides a paging method. The method is executed by the second terminal, and the method includes:
In step 121, in response to receiving the paging message, indication information carrying reason information is sent to the Non-Access Stratum (NAS) of the second terminal.

In one embodiment, in response to the NAS of the second terminal receiving the indication information carrying the reason information, the access attempt initiated to the Access Stratum (AS) does not carry an Access categories parameter, and at this time, the Access Stratum (AS) of the second terminal does not perform a Unified Access Control (UAC) procedure.

It should be noted that those skilled in the art can understand that the methods provided in the embodiments of the present disclosure can be performed alone or together with some methods in the embodiments of the present disclosure or some methods in related art.

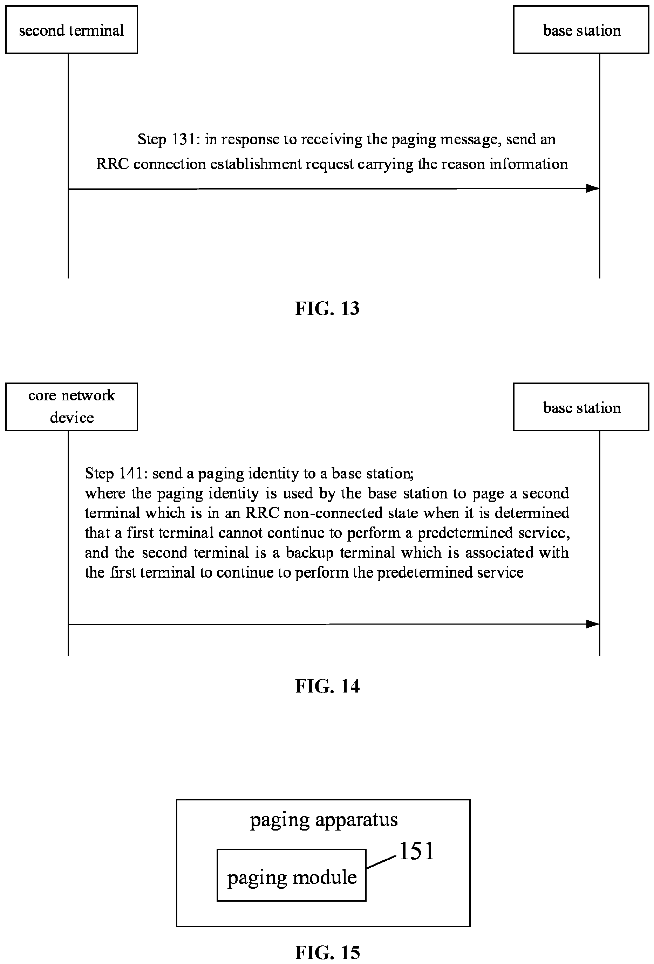

As shown in FIG. 13, an embodiment provides a paging method. The method is performed by the second terminal, and the method includes:
In step 131, in response to receiving the paging message, an RRC connection establishment request carrying reason information is sent.

In one embodiment, in response to determining that the first terminal performing the predetermined service cannot continue to perform the predetermined service, the base station sends the paging message carrying the paging identity to the second terminal in the RRC non-connected state; where the second terminal is a backup terminal associated with the first terminal to continue to perform the predetermined service. An information field of the paging message indicates the reason information for paging the second terminal. The second terminal sends an RCC connection establishment request carrying reason information in response to the paging message. The base station receives the RRC connection establishment request. The base station accepts the RRC connection establishment request and establishes the RRC connection.

In one embodiment, the second terminal is a terminal in the RRC idle state. When the second terminal receives the paging message, the AS forwards the paging message to the NAS. Specifically, after the NAS receives the paging message, the NAS may set the reason information of the call establishment request based on the reason carried in the paging message. For example, the set reason information is for backup use. After the AS subsequently receives the call establishment request, it sends an RRC connection establishment request carrying reason information. Here, the reason information carried in the RRC connection establishment request may indicate: backup use. Here, the backup use is the use associated with the backup terminal in step 31.

In one embodiment, the second terminal is a terminal in the RRC inactive state. When the second terminal receives the paging message, there is no need to forward the paging message to the NAS. Specifically, the AS may specifically set the reason information of the call establishment request based on the reason carried in the paging message. For example, the reason information is for backup use. An RRC connection establishment request carrying reason information is sent subsequently. Here, the reason information carried in the RRC connection establishment request may indicate: backup use.

Alternatively, step 131 may be: in response to receiving the paging message, sending an RRC connection resume request carrying the reason information.

In one embodiment, in response to determining that the first terminal performing the predetermined service cannot continue to perform the predetermined service, the base station sends the paging message carrying the paging identity to the second terminal in the RRC non-connected state; where the second terminal is a backup terminal associated with the first terminal to continue to perform the predetermined service. An information field of the paging message indicates the reason information for paging the second terminal. The second terminal sends an RRC connection resume request carrying reason information to the base station in response to the paging message. The base station receives the RRC connection resume request. The base station accepts the RRC connection resumption request and establishes the RRC connection.

It should be noted that those skilled in the art can understand that the methods provided in the embodiments of the present disclosure can be performed alone or together with some methods in the embodiments of the present disclosure or some methods in related art.

As shown in FIG. 14, an embodiment provides a paging method. The method is performed by a core network device. The method includes:
In step 141, a paging identity is sent to a base station.

The paging identity is used by the base station to page a second terminal which is in an RRC non-connected state when it is determined that a first terminal cannot continue to perform a predetermined service, and the second terminal is a backup terminal which is associated with the first terminal to continue to perform the predetermined service.

In one embodiment, an initial message carrying the paging identity may be sent to the base station when the second terminal performs an attachment procedure; in response to determining that the first terminal performing the predetermined service cannot continue to perform the predetermined service, the base station uses the paging identity carried in the initial message to page the second terminal in the RRC non-connected state.

In one embodiment, the initial message carries information about a mapping relationship between the first terminal and the second terminal. Here, the information about the mapping relationship may be information about a mapping relationship between terminal identities of the first terminal and the second terminal. For example, the terminal identity of the first terminal is "a", the terminal identity of the second terminal is "b", and the mapping relationship may be a relationship between "a" and "b". The mapping relationship may be information about a mapping relationship between terminal identities and group identities of the first terminal and the second terminal. For example, the terminal identity of the first terminal is "a", the terminal identity of the second terminal is "b", both the first terminal and the second terminal belong to a first group, and the identity of the first group is "A", and then the mapping relationship may be a relationship among "a", "b" and "A".

It should be noted that those skilled in the art can understand that the methods provided in the embodiments of the present disclosure can be performed alone or together with some methods in the embodiments of the present disclosure or some methods in related art.

As shown in FIG. 15, an embodiment provides a paging apparatus. The apparatus includes a paging module 151.

The paging module 151 is configured to, in response to determining that a first terminal performing a predetermined service cannot continue to perform the predetermined service, page a second terminal which is in a Radio Resource Control (RRC) non-connected state;
wherein the second terminal is a backup terminal which is associated with the first terminal to continue to perform the predetermined services.

It should be noted that those skilled in the art can understand that the methods provided in the embodiments of the present disclosure can be performed alone or together with some methods in the embodiments of the present disclosure or some methods in related art.

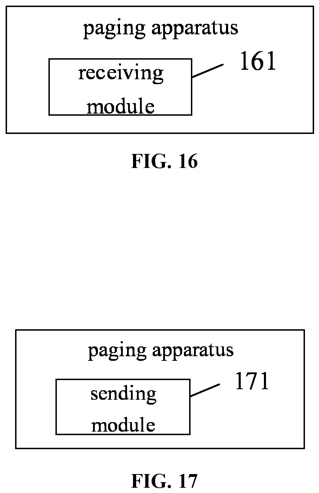

As shown in FIG. 16, an embodiment provides a paging apparatus. The apparatus includes a receiving module 161.

The receiving module 161 is configured to receive a paging message sent by a base station;
wherein the paging message is a message sent by the base station to page the second terminal in response to determining that a first terminal performing a predetermined service cannot continue to perform the predetermined service, and the second terminal is a backup terminal which is associated with the first terminal to continue to perform the predetermined service.

It should be noted that those skilled in the art can understand that the methods provided in the embodiments of the present disclosure can be performed alone or together with some methods in the embodiments of the present disclosure or some methods in related art.

As shown in FIG. 17, an embodiment provides a paging apparatus. The apparatus includes a sending module.

The sending module is configured to send a paging identity to a base station;
wherein the paging identity is used by the base station to page a second terminal which is in an RRC non-connected state when it is determined that a first terminal cannot continue to perform a predetermined service, and the second terminal is a backup terminal which is associated with the first terminal to continue to perform the predetermined service.

It should be noted that those skilled in the art can understand that the methods provided in the embodiments of the present disclosure can be performed alone or together with some methods in the embodiments of the present disclosure or some methods in related art.

An embodiment of the present disclosure provides a communication device. The communication device includes:
a processor;
a memory configured to store instructions executable by the processor;
wherein the processor is configured to: when executing the executable instructions, implement the method applied to any embodiment of the present disclosure.

The processor may include various types of storage medium, and the storage medium may be non-transitory computer storage medium that can continue to memorize information stored on the storage medium after the communication device is powered off.

The processor may be connected to the memory through a bus, and so on and is configured to read the executable program stored in the memory.

An embodiment of the present disclosure also provides a computer storage medium, wherein the computer storage medium stores a computer executable program, and when the executable program is executed by a processor, the method of any embodiment of the present disclosure is implemented.

Regarding the apparatuses in the above embodiments, the specific manner in which each module performs operations has been described in detail in the embodiments related to the methods, and repeated descriptions will be omitted here.

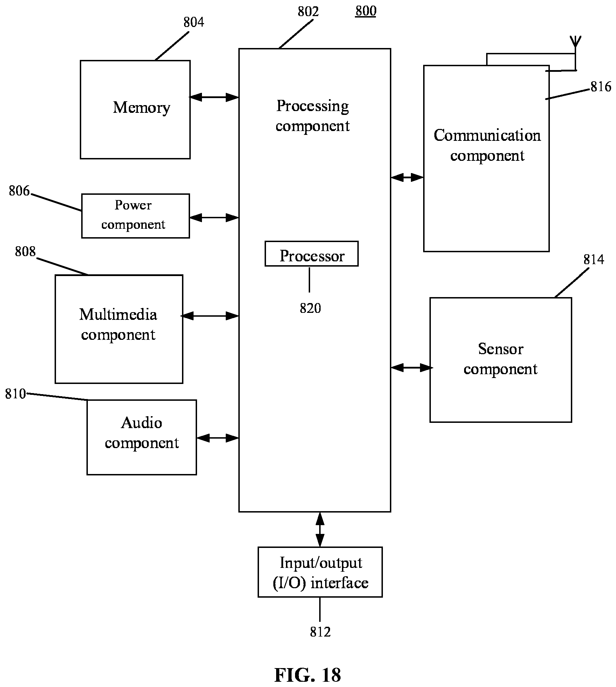

As shown in FIG. 18, an embodiment of the present disclosure provides a structure of a terminal.

Referring to a terminal 800 in FIG. 18, an embodiment of the present disclosure provides a terminal 800. The terminal 800 may be a mobile phone, a computer, a digital broadcast terminal, a messaging device, a gaming console, a tablet, a medical device, exercise equipment, a personal digital assistant, and the like.

Referring to FIG. 18, the terminal 800 may include one or more of the following components: a processing component 801, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 800 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In one example embodiment, the communication component 816 receives a broadcast signal or broadcast associated information from an external broadcast management system via a broadcast channel. In one example embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 804 including instructions executable by the processor 820 in the terminal 800, for performing the above-described methods. For example, the non-transitory computer-readable storage medium may be a ROM, a Random Access Memory (RAM), a CD-ROM, a magnetic tape, a floppy disc, an optical data storage device, and the like.

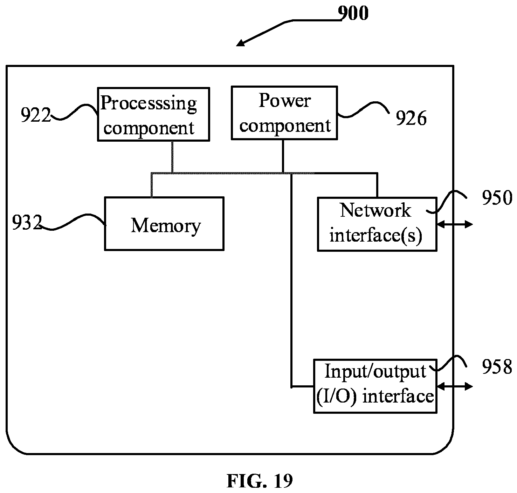

As shown in FIG. 19, an embodiment of the present disclosure shows a structure of a base station. For example, a base station 900 may be provided as a network side device. Referring to FIG. 19, the base station 900 includes a processing component 922 that further includes one or more processors, and memory resources represented by a memory 932 for storing instructions executable by the processing component 922, such as application programs. The application programs stored in the memory 932 may include one or more modules each corresponding to a set of instructions. Further, the processing component 922 is configured to execute the instructions to perform the above described methods which are applied at the base station.

The base station 900 may also include a power component 926 configured to perform power management of the base station 900, wired or wireless network interface(s) 950 configured to connect the device 800 to a network, and an input/output (I/O) interface 958. The base station 900 may operate based on an operating system stored in the memory 932, such as Windows Server^{™}, Mac OS X^{™}, Unix^{™}, Linux^{™}, FreeBSD^{™}, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A paging method, wherein the method is performed by a base station and comprises:
in response to determining that a first terminal performing a predetermined service cannot continue to perform the predetermined service, paging a second terminal in a Radio Resource Control (RRC) non-connected state;
wherein the second terminal is a backup terminal associated with the first terminal to continue to perform the predetermined service.

2. The method according to claim 1, further comprising:
obtaining a paging identity of the second terminal, wherein the paging identity is used to page the second terminal.

3. The method according to claim 2, wherein obtaining the paging identity of the second terminal comprises:
receiving an initial message which carries the paging identity and is sent by a core network device when the second terminal performs an attachment procedure; or,
receiving a connection request completion message which carries the paging identity and is sent by the second terminal when performing the attachment procedure.

4. The method according to claim 3, wherein: the initial message further carries information about a mapping relationship between the first terminal and the second terminal; and/or, the connection request completion message further carries the information about the mapping relationship between the first terminal and the second terminal.

5. The method according to claim 2, wherein paging the second terminal in the RRC non-connected state comprises:
sending a paging message carrying the paging identity to the second terminal in the RRC non-connected state.

6. The method according to claim 1, wherein an information field of the paging message indicates reason information for paging the second terminal.

7. The method according to claim 6, further comprising:
receiving an RRC connection establishment request carrying the reason information sent by the second terminal; or
receiving an RRC connection resume request carrying the reason information sent by the second terminal.

8. The method according to claim 7, further comprising:
in response to receiving the RRC connection establishment request, accepting the RRC connection establishment request; or,
in response to receiving the RRC connection resume request, accepting the RRC connection resume request.

9. A paging method, wherein the method is performed by a second terminal and comprises:
receiving a paging message sent by a base station;
wherein the paging message is a message sent by the base station to page the second terminal in response to determining that a first terminal performing a predetermined service cannot continue to perform the predetermined service, and the second terminal is a backup terminal associated with the first terminal to continue to perform the predetermined service.

10. The method according to claim 9, further comprising:
send a paging identity to the base station, wherein the paging identity is used to page the second terminal.

11. The method according to claim 10, wherein sending the paging identity to the base station comprises:
when performing an attachment procedure, sending a connection request completion message carrying the paging identity to the base station.

12. The method according to claim 11, wherein the connection request completion message further carries information about a mapping relationship between the first terminal and the second terminal.

13. The method according to claim 9, wherein receiving the paging message sent by the base station comprises:
receiving the paging message carrying the paging identity sent by the base station.

14. The method according to claim 13, wherein an information field of the paging message indicates reason information for paging the second terminal.

15. The method according to claim 114, further comprising:
in response to receiving the paging message, sending indication information carrying the reason information to Non-Access Stratum (NAS) of the second terminal.

16. The method according to claim 14, further comprising:
in response to receiving the paging message, sending an RRC connection establishment request carrying the reason information; or
in response to receiving the paging message, sending an RRC connection resume request carrying the reason information.

17. A paging method, wherein the method is performed by a core network device and comprises:
sending a paging identity to a base station;
wherein the paging identity is used by the base station to page a second terminal in an RRC non-connected state when it is determined that a first terminal cannot continue to perform a predetermined service, and the second terminal is a backup terminal associated with the first terminal to continue to perform the predetermined service.

18. The method according to claim 17, wherein sending the paging identity to the base station comprises:
when the second terminal performs an attachment procedure, sending an initial message carrying the paging identity to the base station.

19. The method according to claim 18, wherein the initial message further carries information about a mapping relationship between the first terminal and the second terminal.

20. A paging apparatus, comprising:
a paging module configured to, in response to determining that a first terminal performing a predetermined service cannot continue to perform the predetermined service, page a second terminal in a Radio Resource Control (RRC) non-connected state;
wherein the second terminal is a backup terminal associated with the first terminal to continue to perform the predetermined service.

21. A paging apparatus, comprising:
a receiving module configured to receive a paging message sent by a base station;
wherein the paging message is a message sent by the base station to page the second terminal in response to determining that a first terminal performing a predetermined service cannot continue to perform the predetermined service, and the second terminal is a backup terminal associated with the first terminal to continue to perform the predetermined service.

22. A paging apparatus, comprising:
a sending module configured to send a paging identity to a base station;
wherein the paging identity is used by the base station to page a second terminal in an RRC non-connected state when it is determined that a first terminal cannot continue to perform a predetermined service, and the second terminal is a backup terminal associated with the first terminal to continue to perform the predetermined service.

23. A communication device, comprising:
a memory; and
a processor connected to the memory and configured to implement the method of any one of claims 1 to 8, 9 to 16, or 17 to 19 by executing computer-executable instructions stored on the memory.

24. A computer storage medium configured to store computer-executable instructions, when the computer-executable instructions are executed by a processor, the method of any one of claims 1 to 8, 9 to 16, or 17 to 19 is implemented.
